# EUROPEAN PATENT SPECIFICATION

(11) **EP 3 978 848 B1**
(45) Date of publication and mention of the grant of the patent: **22.11.2023**
(21) Application number: 19930317.3
(22) Date of filing: 15.10.2019
(51) Int. Cl.: F25D 23/06, F25D 23/08, F25D 23/00, B29C 44/18

(54) **REFRIGERATOR AND METHOD FOR MANUFACTURING SAME**
KÜHLSCHRANK UND VERFAHREN ZUR HERSTELLUNG DAVON
RÉFRIGÉRATEUR ET PROCÉDÉ DE FABRICATION ASSOCIÉ

(30) Priority: 24.05.2019 CN 201910440474
(43) Date of publication of application: 06.04.2022
(73) Proprietor: Qingdao Haier Refrigerator Co., Ltd, Qingdao, Shandong 266101 (CN); Haier Smart Home Co., Ltd., Qingdao, Shandong 266101 (CN)
(72) Inventor: LIU, Zhanzhan, Qingdao, Shandong 266101 (CN); LI, Peng, Qingdao, Shandong 266101 (CN); ZHU, Xiaobing, Qingdao, Shandong 266101 (CN)
(74) Representative: Lavoix
(86) International application number: PCT/CN2019/111182
(87) International publication number: WO 2020/237969

(56) References cited:
- EP-A1- 0 838 645
- EP-A2- 0 161 724
- JP-A- H0 682 153
- JP-U- S6 082 192
- KR-A- 20030 010 301
- KR-A- 20180 109 601

## Description

### TECHNICAL FIELD

The present invention relates to the field of refrigerators and manufacture thereof, and particularly to a refrigerator with a more uniform foaming layer, and a manufacturing method of the refrigerator.

### BACKGROUND

JPS6082192U relates to inner boxes forming rooms having cold air passages. The inner boxes have a heat insulating layer.

EP0161724A2 a cabinet for a refrigerator appliance with two spaced-apart preservation compartments, which are each formed from a front-open liner, operate preferably at different temperatures and are disposed one above the other with an intermediate separation zone therebetween and having insulation in the form of synthetic material foamed in-situ to surround and penetrate between said liners to rigidly join them together, and further comprising an outer housing, a flexible elemen is provided adhering to the two liners in order to selectively intercept access to said separation zone.

JPH0682153A concerns an inner box having a first box and a second box arranged in side-by-side relation is installed within an outer box, and a thermal insulating member is arranged between opposed wall surfaces of the first and second boxes so as to enclose the part between the opposed wall surfaces. The thermal insulating member is formed with feeding holes for use in immersing the foam resin into the thermal insulating member in such a manner that they are inclined from an outside part of the thermal insulating member toward an inside part of it in a flowing direction of the foam resin.

Along with the improvement of people's living standards, people have higher and higher requirements for refrigerators. To ensure the thermal insulation, traditional refrigerators usually employ a thick foaming layer which therefore occupies a large area, so that the useable volume in the refrigerators becomes smaller. Therefore, as the thermally insulating materials are further developed, the thermal insulation layer of the refrigerators is further thinned, and a super-thin and large-volume refrigerator arises.

In the super-thin and large-volume refrigerator, the distance between the inner liner and the housing is narrow, which means a narrow space is left for the foaming layer. Therefore, the flowing and filling of a foaming material is a problem difficult to solve. Currently, a majority of refrigerator manufacturers choose to use a plurality of guns to fill material at a back plate of the refrigerator to minimize a flow path of the foaming material. However, the material filling according to the method requires a high cost and exhibits a low efficiency, and cannot satisfy requirements for quick production of refrigerators.

Alternatively, one gun may be selected and used to fill material at a bottom steel of the refrigerator. However, during one-gun material filling, the foaming material enters between the inner liner and the housing through a conduit. A freezing inner liner usually needs a thicker foaming layer than a refrigerating inner liner, a foaming layer is also formed in a middle beam between the freezing inner liner and the refrigerating inner liner, and the conduit is usually disposed in the foaming layer on the rear side of the freezing inner liner and extends to the middle beam. Therefore, the density of the foaming layer at the middle beam is usually high. To make the overall foaming layer of the refrigerator have a uniform density, excessive foaming material usually needs to be filled, so that the amount of used foaming layer increases and the cost rises accordingly.

### SUMMARY

In order to solve the above problems, the present invention proposes a refrigerator according to claim 1. The dependent claims set out particular embodiments of the invention.

To address the above problem, the present invention provides a manufacturing method of a refrigerator according to claim 4. The dependent claims set out particular embodiments of the invention.

Advantageous effects of the present invention are as follows: after the foaming material reaches the first foaming zone, only part of the foaming material enters the interior of the middle beam through the first foaming zone or the second foaming zone due to the blocking of the sealing device, and a large amount of foaming material will not enter the interior of the middle beam at one time, so that the density of the foaming material in the interior of the middle beam will not be too large, and the density of the foaming material in the first foaming zone and the third foaming zone can reach a uniform status.

### BRIEF DESCRIPTION OF THE DRAWINGS

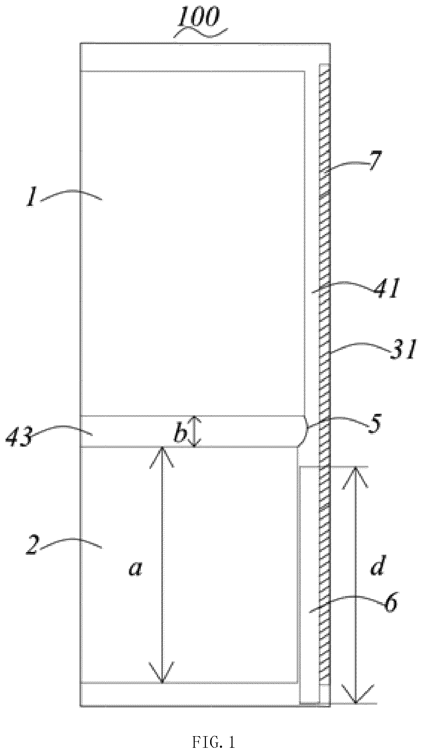

FIG. 1 is a structural schematic diagram of a refrigerator according to the present invention.

### DETAILED DESCRIPTION

In order to enable those skilled in the art to better understand technical solutions of the present invention, the technical solutions in the embodiments of the present invention will be clearly and completely described below with reference to figures in the embodiments of the present invention. Obviously, the described embodiments are only partial embodiments of the present invention, rather than all the embodiments. Based on the embodiments of the present invention, all other embodiments obtained by those having ordinary skill in the art without making inventive efforts shall fall within the protection scope of the present invention.

In addition, references or numerals might be used repeatedly in different embodiments. Such repetitions are only intended to simply and clearly illustrate the present invention and not to mean there is any association between the discussed different embodiments or structures.

As shown in FIG. 1, the present invention provides a refrigerator 100. Generally, the refrigerator 100 has a cabinet and a door body openably and closably disposed on the cabinet. The cabinet comprises a housing, a refrigerating inner liner 1 and a freezing inner liner 2 arranged in the housing, and a foaming layer formed between the housing, the freezing inner liner 2 and the refrigerating inner liner 1. Here, it is agreed that the refrigerator 100 is placed in a vertical direction, and generally, the freezing inner liner 2 is disposed below, the refrigerating inner liner 1 is disposed above, and the door body is openable toward the front side. It should be appreciated that the "front", "rear", "up", "down" etc. mentioned below all refer to a relative relationship between two parts, rather than a specific position.

Specifically, the housing comprises a back plate 31 disposed opposite to the door body and two side plates extending forward from the back plate 31, and the foaming layer comprises a first foaming zone 41 disposed close to the back plate 31 and a second foaming zone disposed close to the side plates, the refrigerating inner liner 1 and the freezing inner liner 2 are spaced apart from each other and a middle beam is formed therebetween, and the foaming layer further comprises a third foaming zone 43 disposed inside the middle beam. Since the freezing inner liner 2 and the refrigerating inner liner 1 in the refrigerator 100 are spaced apart from the back plate 31 and the side plates, and the freezing inner liner 2 and the refrigerating inner liner 1 are also spaced apart from each other, the above-mentioned third foaming zone 43 is connected to the second foaming zone, that is, during the foaming process, the foaming material may circulate between the third foaming zone 43 and the second foaming zone. In the present invention, the refrigerator 100 further comprises a sealing device 5 that at least partially spaces the first foaming zone 41 apart from the third foaming zone 43, so that during the foaming process, the circulation of the foaming material between the first foaming zone 41 and the third foaming zone 43 is hindered.

Therefore, after the foaming material reaches the first foaming zone 41, only part of the foaming material enters the interior of the middle beam through the first foaming zone 41 or the second foaming zone due to the blocking of the sealing device 5, and a large amount of foaming material will not enter the interior of the middle beam at one time, so that the density of the foaming material in the interior of the middle beam will not be too large, and the density of the foaming material in the first foaming zone 41 and the third foaming zone 43 can reach a uniform status.

The refrigerator 100 further comprises a conduit 6 for conveying the foaming material. The conduit 6 is buried in the first foaming zone 41 and extends from the edge of the back plate 31 toward the third foaming zone 43. The sealing device 5 is at least distributed on an extension path of the conduit 6. Since the conduit 6 serves as a device for conveying the foaming material during the foaming process, the density of the foaming material at an opening of the conduit 6 is the largest. Therefore, with the sealing device 5 being disposed on the extension path of the conduit 6, a lot of foaming material may be limited from directly entering the interior of the middle beam, and the filling uniformity of the foaming material can be further improved effectively.

In addition, since the freezing inner liner 2 generally needs a better heat preservation effect, the thickness of the first foaming zone 41 on the back side of the freezing inner liner 2 is usually thicker than the thickness of the refrigerating inner liner 1. Correspondingly, a distance between the freezing inner liner 2 and the back plate 31 is also greater than the distance between the refrigerating inner liner 1 and the back plate 31. Therefore, the conduit 6 is usually disposed between the freezing inner liner 2 and the back plate 31, so that the conduit 6 has enough space. Therefore, after the foaming material is discharged from the conduit 6, it is difficult for the foaming material to enter between the refrigerating inner liner 1 and the back plate 31 because the distance between the refrigerating inner liner 1 and the back plate 31 is relatively small. Therefore, the sealing device 5 in the present embodiment may further play a guiding role, guiding the foaming material to enter between the refrigerating inner liner 1 and the back plate 31. Therefore, the conduit 6 is disposed between the freezing inner liner 2 and the back plate and does not extend beyond the sealing device 5 in the extension direction. On the one hand, such an arrangement is intended to guide the foaming material to be filled better, and on the other hand, the conduit 6 is not adapted to be placed between the refrigerating inner liner 1 and the back plate 31 because the gap between the refrigerating inner liner 1 and the back plate 31 is too narrow.

Certainly, the extension direction of the conduit 6 should not be too short. The housing further comprises a bottom plate and a top plate. Generally, the conduit 6 extends upward from the bottom plate to the rear of the freezing inner liner 2. Assuming that a length of the freezing inner liner 2 in the vertical direction is a and a length of the conduit 6 in the vertical direction is d, a/2<d ≦ a in the present embodiment.

In addition, there is not only the first foaming zone 41 between the back plate 31 and the refrigerating inner liner 1 and the freezing inner liner 2. In the present embodiment, the refrigerator 100 further comprises a vacuum thermal insulation plate 7 disposed against the back plate 31.

Specifically, in the present embodiment, the sealing device 5 completely spaces the first foaming zone 41 apart from the third foaming zone 43, so that after the foaming material enters the first foaming zone 41, it can only directly enter the second foaming zone and then enter the third foaming zone 43 through the second foaming zone, thereby preventing the accumulation of the foaming material in the third foaming zone 43 in the middle beam and making the density of the foaming material uniform.

Certainly, if the sealing device 5 does not completely space the first foaming zone 41 apart from the third foaming zone 43, the objective of the present invention can be achieved as long as the sealing device 5 is distributed on the extension path of the conduit 6, and forms a hindrance for the flow of the foaming material into the third foaming zone 43.

Further, since the freezing inner liner 2 and the refrigerating inner liner 1 are distributed in the vertical direction, the middle beam is arranged in a transverse direction, and the sealing device 5 is also arranged in the transverse direction and fixed between the freezing inner liner 2 and the refrigerating inner liner 1. Furthermore, the sealing device 5 extends arcuately in the longitudinal direction, and, as shown in FIG. 1, the sealing device 5 protrudes toward the back plate 31. Therefore, a length of the sealing device 5 in the longitudinal direction is larger than a height of the middle beam in the longitudinal direction. Specifically, assuming a height of the middle beam in the longitudinal direction is b and a deployed length of the sealing device 5 in the longitudinal direction is c, b<c. Certainly, the deployed length of the sealing device 5 in the longitudinal direction should not be too large because a too large deployed length might hinder the flow of the foaming material to the rear side of the refrigerating inner liner 1. Therefore, c<3b/2.

Correspondingly, the present invention further provides a manufacturing method of the aforementioned refrigerator 100, comprising:
disposing a sealing device 5 at a position of a middle beam close to a back plate 31;
extending a conduit 6 between a housing of the refrigerator 100 and a freezing inner liner 2;
confirming that the sealing device 5 is disposed in an outfeed direction of the conduit 6;
connecting an end of the conduit away from the outfeed direction to an injection port;
opening an outfeed gun to fill the foaming material into the conduit 6.

The manufacturing method of the aforementioned refrigerator 100 of the present invention only comprises processes before and after foaming. Specifically, in the manufacturing method of the refrigerator 100 of the present invention, as compared with the prior art, it is necessary to first dispose the sealing device 5 on the rear side of the middle beam, and then fill the material to prevent the foaming material from directly entering from the back plate 31 into the interior of the middle beam. Furthermore, as stated above, in the specific implementation, the step of "disposing a sealing device 5 at a position of a middle beam close to a back plate 31" is specifically: using the sealing device 5 to completely close a side of the middle beam close to the back plate 31. Therefore, during the material-filling and foaming process of the refrigerator 100, the foaming material, on the one hand, enters the rear side of the refrigerating inner liner 1 from the conduit 6 from the rear side of the freezing inner liner 2, and on the other hand, spreads from the position close to the back plate 31 to a position close to the side plates, so that the foaming material only might enter the interior of the middle beam from the side plates such that the density of the foaming material in the interior of the middle beam is not too high.

Therefore, in summary, the present invention provides the refrigerator 100 and a manufacturing method thereof. The refrigerator 100 in the present invention is partially provided with the sealing device 5 between the first foaming zone 41 and the third foaming zone 43, so that during the material-filing and foaming process, the foaming material will not directly enter the interior of the middle beam, such that the foaming density in the third foaming zone 43 will not be too high, and the density of the foaming material is made more balanced throughout the foaming process.

It should be understood that although the description is described according to the embodiments, not every embodiment only comprises one independent technical solution, that such a description manner is only for the sake of clarity, that those skilled in the art should take the description as an integral part, and that the technical solutions in the embodiments may be suitably combined to form other embodiments understandable by those skilled in the art.

The detailed descriptions set forth above are merely specific illustrations of feasible embodiments of the present invention, and are not intended to limit the scope of protection of the present invention.

## Claims

1. A refrigerator (100), wherein the refrigerator comprises a housing, a refrigerating inner liner (1) and a freezing inner liner (2) arranged in the housing, and a foaming layer formed between the housing, the refrigerating inner liner (1) and the freezing inner liner (2); the housing comprises a back plate (31) and two side plates extending forward from the back plate, and the foaming layer comprises a first foaming zone (41) disposed close to the back plate (31) and a second foaming zone disposed close to the side plates; the refrigerating inner liner and the freezing inner liner (2) are spaced apart from each other and a middle beam is formed therebetween, the foaming layer further comprises a third foaming zone (43) disposed in an interior of the middle beam, and the third foaming zone is connected to the second foaming zone; the refrigerator further comprises a sealing device (5) that at least partially spaces the first foaming zone (41) apart from the third foaming zone (43), wherein the refrigerator further comprises a conduit (6) for conveying the foaming material, and the conduit (6) is buried in the first foaming zone (41) and extends from an edge of the back plate (31) toward the third foaming zone (43); the sealing device is at least distributed on an extension path of the conduit (6); **characterized in that** the middle beam is arranged in a transverse direction, and the sealing device is also arranged in the transverse direction and fixed between the freezing inner liner (2) and the refrigerating inner liner (1); wherein the sealing device extends arcuately in a longitudinal direction; wherein a height of the middle beam in the longitudinal direction is b, a deployed length of the sealing device in the longitudinal direction is c, and b < c < 3b/2.

2. The refrigerator according to claim 1, wherein the conduit (6) is disposed between the freezing inner liner (2) and the back plate (31) and does not extend beyond the sealing device in the extension direction.

3. The refrigerator according to claim 1, wherein the sealing device completely spaces the first foaming zone apart from the third foaming zone (43).

4. A manufacturing method of a refrigerator according to one of the preceding claims, wherein the method comprises:
disposing a sealing device at a position of a middle beam close to a back plate (31);
extending a conduit between a housing of the refrigerator (100) and a freezing inner liner;
confirming that the sealing device is disposed on an extension path of the conduit (6);
connecting an end of the conduit (6) away from an outfeed direction to an injection port;
opening an outfeed gun to fill a foaming material into the conduit (6).

5. The manufacturing method according to claim 4, wherein the step of "disposing a sealing device at a position of a middle beam close to a back plate" is specifically:
using the sealing device to completely close a side of the middle beam close to the back plate.

## Patentansprüche

1. Kühlschrank (100), wobei der Kühlschrank ein Gehäuse, eine Kühlinnenauskleidung (1) und eine Gefrierinnenauskleidung (2), die in dem Gehäuse angeordnet sind, und eine Schaumschicht umfasst, die zwischen dem Gehäuse, der Kühlinnenauskleidung (1) und der Gefrierinnenauskleidung (2) gebildet ist; das Gehäuse eine Rückplatte (31) und zwei Seitenplatten umfasst, die sich von der Rückplatte nach vorne erstrecken, und die Schaumschicht eine erste Schaumzone (41) umfasst, die nahe der Rückplatte (31) angeordnet ist, und eine zweite Schaumzone, die nahe den Seitenplatten angeordnet ist; die Kühlinnenauskleidung und die Gefrierinnenauskleidung (2) voneinander beabstandet sind und ein mittlerer Träger dazwischen gebildet ist, die Schaumschicht ferner eine dritte Schaumzone (43) umfasst, die in einem Inneren des mittleren Trägers angeordnet ist, und die dritte Schaumzone mit der zweiten schäumenden Zone verbunden ist; der Kühlschrank ferner eine Dichtungsvorrichtung (5) umfasst, die die erste Schaumzone (41) zumindest teilweise von der dritten Schaumzone (43) beabstandet, wobei der Kühlschrank ferner eine Leitung (6) zum Fördern des Schaummaterials umfasst und die Leitung (6) in der ersten Schaumzone (41) vergraben ist und sich von einer Rand der Rückplatte (31) in Richtung der dritten Schaumzone (43) erstreckt; die Dichtungsvorrichtung zumindest auf einem Verlängerungspfad der Leitung (6) verteilt ist; **dadurch gekennzeichnet, dass** der mittlere Träger in einer Querrichtung angeordnet ist und die Dichtungsvorrichtung ebenfalls in der Querrichtung angeordnet und zwischen der Gefrierinnenauskleidung (2) und der Kühlinnenauskleidung (1) befestigt ist; wobei sich die Dichtungsvorrichtung bogenförmig in einer Längsrichtung erstreckt; wobei eine Höhe des mittleren Trägers in der Längsrichtung b ist, eine entfaltete Länge der Dichtungsvorrichtung in der Längsrichtung c ist, und b<c<3b/2.

2. Kühlschrank nach Anspruch 1, wobei die Leitung (6) zwischen der Gefrierinnenauskleidung (2) und der Rückwand (31) angeordnet ist und sich in Erstreckungsrichtung nicht über die Dichtungsvorrichtung hinaus erstreckt.

3. Kühlschrank nach Anspruch 1, wobei die Dichtungsvorrichtung die erste Schaumzone vollständig von der dritten Schaumzone (43) trennt.

4. Herstellungsverfahren eines Kühlschranks nach einem der vorherigen Ansprüche, das Verfahren umfassend:
Anbringen einer Dichtungsvorrichtung an einer Position eines mittleren Trägers in der Nähe einer Rückenplatte (31);
Verlängern einer Leitung zwischen einem Gehäuse des Kühlschranks (100) und einer Gefrierinnenauskleidung;
Bestätigen, dass die Dichtungsvorrichtung auf einem Verlängerungspfad der Leitung (6) angeordnet ist;
Verbinden eines Endes der Leitung (6), das von der Ausgaberichtung abgewandt ist, mit einer Einspritzöffnung;
Öffnen einer Auslasspistole zum Einfüllen eines Schaummaterials in die Leitung (6).

5. Herstellungsverfahren nach Anspruch 4, wobei der Schritt eines "Anbringen einer Dichtungsvorrichtung an einer Position eines mittleren Trägers in der Nähe einer Rückenplatte" spezifisch wie folgt ist:
Verwenden der Dichtungsvorrichtung, um eine Seite des mittleren Trägers in der Nähe der Rückenplatte vollständig zu verschließen.

## Revendications

1. Réfrigérateur (100), dans lequel le réfrigérateur comprend une enveloppe, une cuve interne de réfrigération (1) et une cuve interne de congélation (2) disposées dans l'enveloppe, et une couche de mousse formée entre l'enveloppe, la cuve interne de réfrigération (1) et la cuve interne de congélation (2) ; l'enveloppe comprend une plaque arrière (31) et deux plaques latérales s'étendant vers l'avant à partir de la plaque arrière, et la couche de mousse comprend une première zone de moussage (41) disposée près de la plaque arrière (31) et une deuxième zone de mousse disposée près des plaques latérales ; la cuve interne de réfrigération et la cuve interne de congélation (2) sont espacées l'une de l'autre et une partie de soutien intermédiaire est formée entre elles, la couche de moussage comprend en outre une troisième zone de moussage (43) disposée à l'intérieur de la partie de soutien intermédiaire, et la troisième zone de moussage est reliée à la deuxième zone de moussage ; le réfrigérateur comprend en outre un dispositif d'étanchéité (5) qui sépare au moins partiellement la première zone de moussage (41) de la troisième zone de moussage (43), dans lequel le réfrigérateur comprend en outre un conduit (6) pour transporter le matériau moussant, et le conduit (6) est enterré dans la première zone de moussage (41) et s'étend d'un bord de la plaque arrière (31) vers la troisième zone de moussage (43) ; le dispositif d'étanchéité est au moins réparti sur un chemin d'extension du conduit (6) ; **caractérisé en ce que** la partie de soutien intermédiaire est disposée dans une direction transversale, et le dispositif d'étanchéité est également disposé dans la direction transversale et fixé entre la cuve interne de congélation (2) et la cuve interne de réfrigération (1) ; dans lequel le dispositif d'étanchéité s'étend en arc de cercle dans une direction longitudinale ; dans lequel une hauteur de la partie de soutien intermédiaire dans la direction longitudinale est b, une longueur déployée du dispositif d'étanchéité dans la direction longitudinale est c, et b<c<3b/2.

2. Réfrigérateur selon la revendication 1, dans lequel le conduit (6) est disposé entre la cuve interne de congélation (2) et la plaque arrière (31) et ne s'étend pas au-delà du dispositif d'étanchéité dans la direction d'extension.

3. Réfrigérateur selon la revendication 1, dans lequel le dispositif d'étanchéité sépare complètement la première zone de moussage de la troisième zone de moussage (43).

4. Procédé de fabrication d'un réfrigérateur selon l'une des revendications précédentes, dans lequel le procédé comprend :
la disposition d'un dispositif d'étanchéité à l'emplacement d'une partie de soutien intermédiaire près d'une plaque arrière (31) ;
l'extension d'un conduit entre une enveloppe du réfrigérateur (100) et une cuve interne de congélation ;
la confirmation que le dispositif d'étanchéité est disposé sur un chemin d'extension du conduit (6) ;
la connexion d'une extrémité du conduit (6) éloignée d'une direction de sortie à un orifice d'injection ;
l'ouverture d'un pistolet de sortie pour remplir le conduit (6) d'un matériau moussant.

5. Procédé de fabrication selon la revendication 4, dans lequel l'étape de « disposition d'un dispositif d'étanchéité à l'emplacement d'une partie de soutien intermédiaire près d'une plaque arrière » consiste spécifiquement à :
utiliser le dispositif d'étanchéité pour fermer complètement un côté de la partie de soutien intermédiaire près de la plaque arrière.
